(19) Europäisches Patentamt
European Patent Office
Office européen des brevets

(11) EP 0 866 812 B1

(12) # EUROPÄISCHE PATENTSCHRIFT

(45) Veröffentlichungstag und Bekanntmachung des Hinweises auf die Patenterteilung:
**25.07.2001 Patentblatt 2001/30**

(21) Anmeldenummer: **96942295.5**

(22) Anmeldetag: **02.12.1996**

(51) Int Cl.7: **C08F 12/04**

(86) Internationale Anmeldenummer:
**PCT/EP96/05329**

(87) Internationale Veröffentlichungsnummer:
**WO 97/21741 (19.06.1997 Gazette 1997/26)**

(54) **VERFAHREN ZUR HERSTELLUNG VON COPOLYMERISATEN VON VINYLAROMATISCHEN VERBINDUNGEN IN EINER STUFE UNTER VERWENDUNG VON DOPPELSCHNECKENEXTRUDERN**

PROCESS FOR THE PREPARATION OF COPOLYMERISATES OF VINYL AROMATIC COMPOUNDS IN A STAGE USING DOUBLE SCREW EXTRUDERS

PROCEDE DE PRODUCTION DE COPOLYMERISATS DE COMPOSES VINYLAROMATIQUE EN UNE SEULE ETAPE, AU MOYEN D'EXTRUDEUSES A DEUX VIS

(84) Benannte Vertragsstaaten:
**AT BE CH DE DK ES FI FR GB GR IE LI LU MC NL PT SE**

(30) Priorität: **11.12.1995 DE 19546095**

(43) Veröffentlichungstag der Anmeldung:
**30.09.1998 Patentblatt 1998/40**

(73) Patentinhaber: **BASF AKTIENGESELLSCHAFT**
**67056 Ludwigshafen (DE)**

(72) Erfinder:
- **WÜNSCH, Josef**
  **D-67105 Schifferstadt (DE)**
- **HOFMANN, Jürgen**
  **D-67069 Ludwigshafen (DE)**
- **KESSLER, Thomas**
  **D-67105 Schifferstadt (DE)**

(56) Entgegenhaltungen:
**EP-A- 0 379 128** **EP-A- 0 522 641**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 866 812 B1

Printed by Jouve, 75001 PARIS (FR)

## Beschreibung

Die vorliegende Erfindung betrifft Verfahren zur Herstellung von Copolymerisaten von vinylaromatischen Verbindungen bei Temperaturen im Bereich von -80 bis 150°C in Gegenwart von Metallocenkatalysatorsystemen.

Copolymerisate von vinylaromatischen Verbindungen, insbesondere von Styrol, finden aufgrund ihres Eigenschaftsprofils in vielen Bereichen Verwendung, beispielsweise als Verpackungsmaterialien oder als Isolierüberzüge für Metalle oder Kunststoffe, speziell bei elektrischen Anwendungen.

EP-A-0379128 beschreibt ein Verfahren zur Herstellung von einem Copolymerisat von Styrol und p-Methylstyrol in einem gleich sinning drehenden dicht kämmenden Doppelschneckenestrader. Ein Comonomer mit mindestens zwei ungesättigten kohlen wasser stoff resten wird jedoch micht eingesetzt.

Die EP-A 311 099 und die EP-A 490 269 beschreiben Verfahren zur Herstellung von Copolymerisaten von Styrol und ein divinyl aromatischer comonomer unter Verwendung von Rührkesseln. Nachteilig hierbei ist, daß sich die Copolymerisate nur umständlich handhaben lassen.

Der vorliegenden Erfindung lag daher die Aufgabe zugrunde, neue Verfahren zur Herstellung von Copolymerisaten von vinylaromatischen Verbindungen zur Verfügung zu stellen, die die genannten Nachteile nicht aufweisen und die insbesondere verfahrenstechnisch wenig aufwendig sind.

Demgemäß wurden Verfahren zur Herstellung von Copolymerisaten von vinylaromatischen Verbindungen bei Temperaturen im Bereich von -80 bis 150°C in Gegenwart von Metallocenkatalysatorsystemen gefunden, unter Verwendung eines gleichsinnigdrehenden, dichtkämmenden Doppelschneckenextruders polymerisiert, wobei man als Comonomer eine aromatische Verbindung mit mindestens zwei ungesättigten Kohlen wasser stoffen resten eingesetzt wird.

Weiterhin wurde die Verwendung der hierbei erhältlichen Copolymerisate zur Herstellung von Fasern Folien und Formkörpern gefunden sowie die hieraus erhältlichen Fasern, Folien und Formkörper.

Als vinylaromatische Verbindungen eignen sich besonders Verbindungen der allgemeinen Formel I

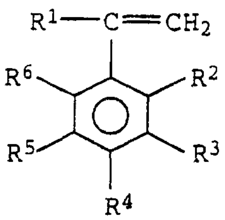

(I),

in der die Substituenten folgende Bedeutung haben:

| | |
|---|---|
| $R^1$ | Wasserstoff oder $C_1$- bis $C_4$-Alkyl, |
| $R^2$ bis $R^6$ | unabhängig voneinander Wasserstoff, $C_1$- bis $C_{12}$-Alkyl, $C_6$- bis $C_{18}$-Aryl, Halogen oder wobei zwei benachbarte Reste gemeinsam für 4 bis 15 C-Atome aufweisende cyclische Gruppen stehen. |

Bevorzugt werden vinylaromatische Verbindungen der Formel I eingesetzt, in denen

| | |
|---|---|
| $R^1$ | Wasserstoff bedeutet und |
| $R^2$ bis $R^6$ | für Wasserstoff, $C_1$- bis $C_4$-Alkyl, Chlor oder Phenyl stehen oder wobei zwei benachbarte Reste gemeinsam für 4 bis 12 C-Atome aufweisende cyclische Gruppen stehen, so daß sich als Verbindungen der allgemeinen Formel I beispielsweise Naphthalinderivate oder Anthracenderivate ergeben. |

Beispiele für solche bevorzugten Verbindungen sind:

Styrol, p-Methylstyrol, p-Chlorstyrol, 2,4-Dimethylstyrol, 4-Vinylbiphenyl, 2-Vinylnaphthalin oder 9-Vinylanthracen.

Es können auch Mischungen verschiedener vinylaromatischer Verbindungen eingesetzt werden, vorzugsweise wird jedoch nur eine vinylaromatische Verbindung verwendet.

Besonders bevorzugte vinylaromatische Verbinduncren sind Styrol und p-Methylstyrol.

Die Herstellung von vinylaromatischen Verbindungen der allgemeinen Formel I ist an sich bekannt und beispielsweise in Beilstein 5, 367, 474, 485 beschrieben.

Als Comonomere werden bei dem erfindungsgemäßen Verfahren bevorzugt aromatische Verbindungen mit mindestens zwei ungesättigten Kohlenwasserstoffresten eingesetzt.

Geeignet sind beispielsweise Verbindungen der allgemeinen Formel II

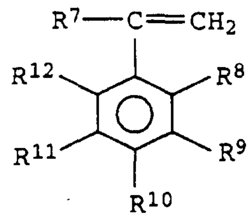

II,

$R^7$ Wasserstoff oder $C_1$- bis $C_4$- Alkyl,

$R^8$ bis $R^{12}$ unabhängig voneinander Wasserstoff, $C_1$- bis $C_{12}$-Alkyl, $C_6$- bis $C_{18}$-Aryl, Halogen oder einen ungesättigten Kohlenwasserstoffrest mit 2 bis 10 C-Atomen, wobei mindestens einer der Reste $R^8$ bis $R^{12}$ für einen ungesättigten Kohlenwasserstoffrest mit 2 bis 10 C-Atomen steht, oder wobei zwei benachbarte Reste gemeinsam für 4 bis 15 C-Atome aufweisende cyclische Gruppen stehen, die ihrerseits wiederum ungesättigte Kohlenwasserstoffreste mit 2 bis 10 C-Atome tragen können.

Bevorzugt sind Verbindungen der allgemeinen Formel II, in denen

$R^7$ Wasserstoff bedeutet und

$R^8$ bis $R^{12}$ für Wasserstoff, $C_1$- bis $C_4$-Alkyl, Phenyl, Chlor oder einen ungesättigten Kohlenwasserstoffrest mit 2 bis 6 C-Atomen steht, wobei mindestens einer der Reste $R^8$ bis $R^{12}$ für einen solchen ungesättigten Kohlenwasserstoffrest steht, oder wobei zwei benachbarte Reste gemeinsam für 4 bis 12 C-Atome aufweisende cyclische Gruppen stehen, so daß sich als Verbindungen der allgemeinen Formel II beispielsweise Naphthalinderivate oder Anthracenderivate ergeben, wobei diese cyclische Gruppen ihrerseits wiederum ungesättigte Kohlenwasserstoffreste mit 2 bis 6 C-Atomen tragen können.

Beispiele für solche bevorzugten Verbindungen sind:
p-Divinylbenzol, m-Divinylbenzol, Trivinylbenzole, Allylstyrole, Methallylstyrole, Butenylstyrole, Pentenylstyrole, Divinylnaphthaline und Divinylanthracene.

Die ungesättigten Kohlenwasserstoffreste stehen also beispielsweise für Vinylgruppen, Allylgruppen, Methallylgruppen, Butenyloder Pentenylgruppen, vorzugsweise für Vinylgruppen.

Es können auch Mischungen verschiedener aromatischer Verbindungen mit mindestens zwei ungesättigten Kohlenwasserstoffresten eingesetzt werden.

Die Herstellung solcher aromatischer Verbindungen mit mindestens zwei ungesättigten Kohlenwasserstoffresten ist an sich bekannt und beispielsweise in "Die angewandte Chemie", Int. Ed. 2, 1963, 98 beschrieben.

Vorzugsweise liegt das Mengenverhältnis von vinylaromatischer Verbindung zu dem Comonomer im Bereich von 1 000 000:1 bis 0,001:1, insbesondere 100 000:1 bis 1:1.

Bei den erfindungsgemäßen Verfahren werden als Metallocenkomplexe A) vorzugsweise solche der allgemeinen Formel III

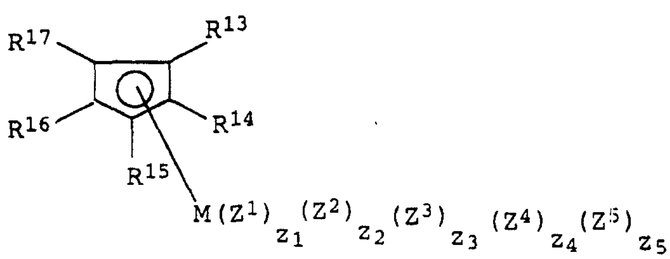

III,

in der die Substituenten und Indices folgende Bedeutung haben:

$R^{13}$ bis $R^{17}$ Wasserstoff, $C_1$- bis $C_{10}$-Alkyl, 5- bis 7-gliedriges Cycloalkyl, das seinerseits $C_1$- bis $C_6$-Alkylgruppen als Substituenten tragen kann, $C_6$- bis $C_{15}$-Aryl oder Arylalkyl und wobei gegebenenfalls auch zwei

benachbarte Reste gemeinsam für 4 bis 15 C-Atome aufweisende cyclische Gruppen stehen können, oder $Si(R^{18})_3$,

mit $R^{18}$ — $C_1$- bis $C_{10}$-Alkyl, $C_6$- bis $C_{15}$-Aryl oder $C_3$ bis$C_{10}$-Cycloalkyl

M — ein Metall der III. bis VI. Nebengruppe des Perioden systems der Elemente oder ein Metall der Lanthanidenreihe

$Z^1$ bis $Z^5$ — Wasserstoff, Halogen, $C_1$- bis $C_{10}$-Alkyl, $C_6$- bis $C_{15}$-Aryl, $C_1$- bis $C_{10}$-Alkoxy oder $C_1$- bis $C_{15}$-Aryloxy und

$z_1$ bis $z_5$ — 0, 1, 2, 3, 4 oder 5, wobei die Summe $z_1+z_2+z_3+z_4+z_5$ der Wertigkeit von M abzüglich der Zahl 1 entspricht.

eingesetzt.

Besonders bevorzugte Metallocenkomplexe der allgemeinen Formel III sind solche, in denen

M — für ein Metall der IV. Nebengruppe des Periodensystems der Elemente steht, also für Titan, Zirkonium oder Hafnium, insbesondere für Titan und

$Z^1$ bis $Z^5$ — $C_1$- bis $C_{10}$-Alkyl, $C_1$- bis $C_{10}$-Alkoxy oder Halogen bedeuten.

Beispiele für solche bevorzugten Metallocenkomplexe sind:

Pentamethylcyclopentadienyltitantrichlorid, Pentamethylcyclopentadienyltitantrimethyl und Pentamethylcyclopentadienyltitantrimethylat.

Es können auch solche Metallocenkomplexe, wie in der EP-A 584 646 beschrieben, eingesetzt werden.

Mischungen verschiedener Metallocenkomplexe können auch einge-setzt werden.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium, Vanadium, Niob oder Tantal, bevorzugt ist.

Beispiele für entsprechende Herstellungsverfahren sind u.a. im Journal of Organometallic Chemistry, 369 (1989), 359-370 beschrieben.

Als metalloceniumionenbildende Verbindung B) können die Katalysatorsysteme offenkettige oder cyclische Alumoxanverbindungen enthalten.

Geeignet sind beispielsweise offenkettige oder cyclische Alumoxanverbindungen der allgemeinen Formel V oder VI

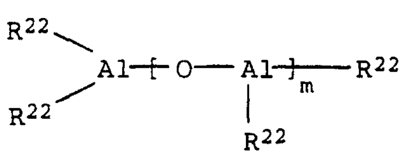

V

oder

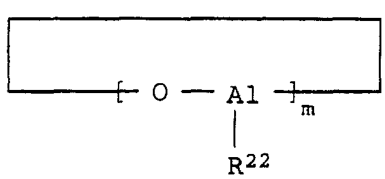

VI,

wobei $R^{22}$ — eine $C_1$- bis $C_4$-Alkylgruppe bedeutet, bevorzugt Methyl- oder Ethylgruppe und m für eine ganze Zahl von 5 bis 30, bevorzugt 10 bis 25 steht.

Die Herstellung dieser oligomeren Alumoxanverbindungen erfolgt üblicherweise durch Umsetzung einer Lösung von Trialkylaluminium mit Wasser und ist u.a. in der EP-A 284 708 und der US-A 4,794,096 beschrieben.
In der Regel liegen die dabei erhaltenen oligomeren Alumoxanverbindungen als Gemische unterschiedlich langer, sowohl linearer als auch cyclischer Kettenmoleküle vor, so daß m als Mittelwert anzusehen ist. Die Alumoxanverbindungen können auch im Gemisch mit anderen Metallalkylen, bevorzugt mit Aluminiumalkylen vorliegen.
Es hat sich als vorteilhaft erwiesen, die Metallocenkomplexe und die oligomere Alumoxanverbindung in solchen Mengen zu verwenden, daß das atomare Verhältnis zwischen Aluminium aus der oligomeren Alumoxanverbindung und dem Übergangsmetall aus den Metallocenkomplexen im Bereich von 10:1 bis $10^6$:1, insbescndere im Bereich von 10:1 bis $10^4$:1, liegt.
Als metalloceniumionenbildende Verbindung B) können auch Koordinationskomplexverbindungen, ausgewählt aus der Gruppe der starken, neutralen Lewissäuren, der ionischen Verbindungen mit lewissauren Kationen und der ionischen Verbindungen mit Brönstedsäuren als Kationen eingesetzt werden.
Als starke neutrale Lewissäuren sind Verbindungen der allgemeinen Formel VII

$$M^1X^1X^2X^3 \qquad \text{VII}$$

bevorzugt, in der

$M^1$ ein Element der III. Hauptgruppe des Periodensystems bedeutet, insbesondere B, Al oder Ga, vorzugsweise B,

$X^1$,$X^2$ und $X^3$ für Wasserstoff, $C_1$- bis $C_{10}$-Alkyl, $C_6$- bis $C_{15}$-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen, insbesondere für Halogenaryle, vorzugsweise für Pentafluorphenyl.

Besonders bevorzugt sind Verbindungen der allgemeinen Formel VII, in der $X^1$, $X^2$ und $X^3$ gleich sind, vorzugsweise Tris(pentafluorphenyl)boran. Diese Verbindungen sowie Verfahren zu ihrer Herstellung sind an sich bekannt und beispielsweise in der WO 93/3067 beschrieben.
Als ionische Verbindungen mit lewissauren Kationen sind Verbindungen der allgemeinen Formel VIII

$$[(Y^{a+})Q_1Q_2...Q_z]^{d+} \qquad \text{VIII}$$

geeignet, in denen

Y ein Element der I. bis VI. Hauptgruppe oder der I. bis VIII. Nebengruppe des Periodensystems bedeutet,

$Q_1$ bis $Q_z$ für einfach negativ geladene Reste wie $C_1$- bis $C_{28}$-Alkyl, $C_6$- bis $C_{15}$-Aryl, Alkylaryl, Arylalkyl, Halogenalkyl, Halogenaryl mit jeweils 6 bis 20 C-Atomen im Aryl- und 1 bis 28 C-Atome im Alkylrest, $C_1$- bis $C_{10}$-Cycloalkyl, welches gegebenenfalls mit $C_1$- bis $C_{10}$-Alkylgruppen substituiert sein kann, Halogen, $C_1$- bis $C_{28}$-Alkoxy, $C_6$- bis $C_{15}$-Aryloxy, Silyl- oder Mercaptylgruppen

a für ganze Zahlen von 1 bis 6 steht,

z für ganze Zahlen von 0 bis 5

d der Differenz a - z entspricht, wobei d jedoch größer oder gleich 1 ist.

Besonders geeignet sind Carboniumkationen, Oxoniumkationen und Sulfoniumkationen sowie kationische Übergangsmetallkomplexe. Insbesondere sind das Triphenylmethylkation, das Silberkation und das 1,1'-Dimethylferrocenylkation zu nennen.
Bevorzugt besitzen sie nicht koordinierende Gegenionen, insbesondere Borverbindungen, wie sie auch in der WO 91/09882 genannt werden, bevorzugt Tetrakis(pentafluorophenyl)borat.
Ionische Verbindungen mit Brönsted-Säuren als Kationen und vorzugsweise ebenfalls nicht koordinierende Gegenionen sind in der WO 93/3067 genannt, bevorzugtes Kation ist das N,N-Dimethylanilinium.
Es hat sich als besonders geeignet erwiesen, wenn das molare Verhältnis von Bor aus der metalloceniumionenbildenden Verbindung zu Übergangsmetall aus dem Metallocenkomplex im Bereich von 0,1:1 bis 10:1 liegt, insbesondere im Bereich von 1:1 bis 5:1.

Das bei dem erfindungsgemäßen Verfahren eingesetzte Katalysatorsystem enthält als Komponente C) eine Aluminiumverbindung der allgemeinen Formel IV

$$AlR^{19}R^{20}R^{21} \qquad (IV),$$

in der

$R^{19}$ bis $R^{21}$ für Fluor, Chlor, Brom, Jod oder $C_1$- bis $C_{12}$-Alkyl stehen, bevorzugt für $C_1$- bis $C_8$-Alkyl

enthalten.

Vorzugsweise sind die Reste $R^{19}$ bis $R^{21}$ gleich und stehen für Methyl, Ethyl, Isobutyl oder n-Hexyl.

Bevorzugt ist die Komponente C) in einer Menge von 2000 : 1 bis 1 : 1, insbesondere 800 : 1 bis 10 : 1 (molares Verhältnis A1 aus IV zu Übergangsmetall aus III) im Katalysatorsystem enthalten.

Als Lösungsmittel für die Metallocenkomplexe werden üblicherweise aromatische Kohlenwasserstoffe eingesetzt, bevorzugt mit 6 bis 20 C-Atomen, insbesondere Xylole und Toluol sowie deren Mischungen.

Die Metallocenkomplexe können ungeträgert oder geträgert eingesetzt werden.

Geeignete Trägermaterialien sind beispielsweise Kieselgele, bevorzugt solche der Formel $SiO_2 \cdot bAl_2O_3$, worin b für eine Zahl im Bereich von 0 bis 2 steht, vorzugsweise 0 bis 0,5; also im wesentlichen Alumosilikate oder Siliciumdioxid. Vorzugsweise weisen die Träger einen Teilchendurchmesser im Bereich von 1 bis 200 µm auf, insbesondere 30 bis 80 µm. Derartige Produkte sind im Handel erhältlich, z.B. als Silica Gel 332 der Firma Grace.

Weitere Träger sind u.a. feinteilige Polyolefine, beispielsweise feinteiliges Polypropylen oder Polyethylen, aber auch Polyethylenglycol, Polybutylenterephthalat, Polyethylenterephthalat, Polyvinylalkohol, Polystyrol, Polybutadien, Polycarbonate oder deren Copolymere.

Das erfindungsgemäße Verfahren wird unter Verwendung eines gleichsinnigdrehenden, dichtkämmenden und damit selbstreinigenden Doppelschneckenextruder, vorzugsweise einstufig, durchgeführt.

Die Reaktionstemperatur liegt zwischen -80 und 150°C, bevorzugt zwischen 0° und 120°C. Es ist aber auch möglich, daß ein Temperaturgradient von 0 bis 120°C über temperierbare Gehäuseummantelungen um das Reaktionsrohr angelegt wird.

Der Extruder kann aus mehreren Einzelzonen bestehen, die unterschiedlich temperiert werden können.

Der Außendurchmesser der gleichsinnigdrehenden, bevorzugt zweigängigen Knet- und Förderelemente der Doppelschneckenextruder liegt vorzugsweise im Bereich von 25 bis 70 mm, insbesondere 30 bis 58 mm.

Die freien Spalträume zwischen Extrudergehäuse und Schneckenelement liegen im Bereich von 0,2 bis 0,8 mm, insbesondere 0,3 bis 0,5 mm.

Die Schneckendrehzahl kann im Bereich von 3 bis 500 Umdrehungen pro Minute liegen, vorzugsweise 5 bis 30 Umdrehungen pro Minute.

Die mittlere Verweilzeit im Extruder kann 0,1 bis 240 Minuten betragen, vorzugsweise 2 bis 20 Minuten.

Die mittlere Verweilzeit im Extruder kann über die Anzahl der Gehäuseblöcke reguliert werden. Die Anzahl der Gehäuseblöcke liegt vorzugsweise im Bereich von 6 bis 20, insbesondere von 8 bis 12. Besonders bevorzugt werden 10 Gehäuseblöcke verwendet, wobei im ersten Gehäuseblock eine Rückentgasung stattfindet, in den zweiten die Einsatzstoffe dosiert werden, die Gehäuseblöcke 3 bis 8 sind Reaktionsgehäuseblöcke, die Gehäuseblöcke 9 und 10 können mit anderer Temperatur beheizt werden und der Gehäuseblock 10 dient als Austragsgehäuse.

Vorzugsweise wird das erfindungsgemäße Verfahren so durchgeführt, daß die vinylaromatische Verbindung, das Comonomer, die metalloceniumionenbildende Verbindung B) und die Aluminiumverbindung C) unter Inertgasatmosphäre gemischt und auf den ersten Gehäuseblock des Extruders zudosiert werden. Parallel dazu kann ebenfalls auf den ersten Gehäuseblock (Zone) eine Lösung oder Suspension des Metallocenkomplexes A) zudosiert werden.

Als Lösung- bzw. Suspensionsmittel sind cyclische und acyclische Kohlenwasserstoffe wie Butane, Pentane, Hexane oder Heptane zu nennen, weiterhin aromatische Kohlenwasserstoffe wie Benzol, Toluol oder Ethylbenzol sowie sauerstoffhaltige Kohlenwasserstoffe wie Tetrahydrofuran, halogenhaltige Kohlenwasserstoffe wie Dichlormethan oder stickstoffhaltige Kohlenwasserstoffe wie N-Methylpiperidin sowie Mischungen hiervon.

Vorzugsweise wird die Dosiermenge so gewählt, daß 500 bis 2000 g/h der Mischung aus vinylaromatischer Verbindung, Komponenten B) und C) zugeführt werden und 100 bis 200 $cm^3$/h an der Lösung oder Suspension des Metallocenkomplexes.

Die Polymerisation wird vorzugsweise in der vinylaromatischen Verbindung als Reaktionsmedium, d.h. in

Masse durchgeführt.

Das erfindungsgemäße Verfahren ist technisch einfach durchführbar, es werden hohe Umsätze erzielt, die Gefahr des Verklebens bzw. des Zuwachsens der Austrittsöffnungen des Extruders ist gering und die entstehenden Copolymerisate sind syndiotaktisch und eignen sich insbesondere zur Verwendung als Formmassen in elektrischen oder hochtemperaturbeständigen Anwendungen. Da die entstehenden Copolymerisate noch eine vinylaromatische Gruppe enthalten, eignen sie sich auch als Einsatzstoffe für weitere chemische Reaktionen.

Beispiele

Beispiel 1: Herstellung eines Copolymerisats aus Styrol und Divinylbenzol

12,0 kg Styrol (115,2 mol) und 12 g Divinylbenzol (0,092 mol) (Isomeren-Gemisch) wurden mit 1,642 kg Methylaluminoxan (2,881 mol) (Fa. Witco) und 1,427 kg Triisobutylaluminium (1,440 mol) (Fa. Witco) unter Inertgas (Stickstoff) gemischt und mit einer Zahnrad-Dosierpumpe (Fa. Feinprüf) in einem Doppelschneckenextruder ZE 40A (Fa. Berstorff) mit einer Menge von 1 kg Mischung/h zudosiert. Die Temperatur am ersten Gehäuseblock betrug 61°C und wurde über alle Gehäuseblöcke konstant gehalten. Parallel zur Zudosierung dieser Mischung wurde ebenfalls auf den ersten Gehäuseblock 2,1912 g (0,0096 mol) (Pentamethylcyclopentadienyl)trimethyltitan, gelöst in 1,2 1 Toluol, mit einer LEWA-Kolbenpumpe (Fa. M3) mit einer Menge von 100 ml Lösung/h zudosiert.

Am Kopfende des Extruders wurde das entstandene Copolymerisat als Pulver entnommen.

| | |
|---|---|
| Umsatz (bezogen auf Styrol) | 78 % |
| Syndiotaktizität | 98,5 % |
| Molekulargewicht $M_w$ | 992000 |
| $M_w/M_n$ | 2,79 |
| Anteil freier Vinylgruppen im Copolymerisat | 1,9 mol-% |

Die Molekulargewichte $M_w$ (Gewichtsmittelwert) und $M_n$ (Zahlenmittelwert) wurden durch Gelpermeationschromatographie mit 1,2,4-Trichlorbenzol als Lösungsmittel bei 135°C bestimmt. Die Kalibrierung erfolgte mit engverteilten Polystyrolstandards. Der syndiotaktische Anteil wurde durch $^{13}C$-NMR bestimmt.

**Patentansprüche**

1. Verfahren zur Herstellung von Copolymerisaten von vinylaromatischen Verbindungen bei Temperaturen im Bereich von - 80 bis 150°C in Gegenwart von Metallocenkatalysatorsystemen, unter Verwendung eines gleichsinnigdrehenden, dichtkämmenden Doppelschneckenextruders
   dadurch gekennzeichnet, daß als comonomer eine aromatische verbindung mit mindertens zwei ungesättigten kolhen wasser stoff resten eingesetzt wird.

2. Verfahren nach Anspruch 1, dadurch gekennzeichnet, daß als vinylaromatische Verbindungen Verbindungen der allgemeinen Formel I

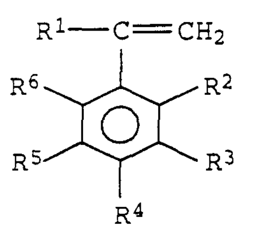

I,

in der die Substituenten folgende Bedeutung haben:

$R^1$ Wasserstoff oder $C_1$- bis $C_4$-Alkyl,

$R^2$ bis $R^6$ unabhängig voneinander Wasserstoff, $C_1$- bis $C_{12}$-Alkyl, $C_6$- bis $C_{18}$-Aryl, Halogen oder wobei zwei benachbarte Reste gemeinsam für 4 bis 15 C-Atome aufweisende cyclische Gruppen stehen,

eingesetzt werden.

**3.** Verfahren nach den Ansprüchen 1 oder 2, dadurch gekennzeichnet, daß als Comonomer Verbindungen der allgemeinen Formel II

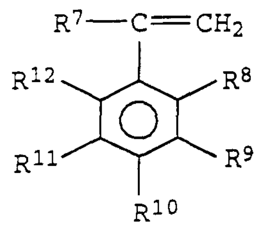

II,

in der die Substituenten folgende Bedeutung haben:

| | |
|---|---|
| $R^7$ | Wasserstoff oder $C_1$- bis $C_4$- Alkyl, |
| $R^8$ bis $R^{12}$ | unabhängig voneinander Wasserstoff, $C_1$- bis $C_{12}$-Alkyl, $C_6$- bis $C_{18}$-Aryl, Halogen oder einen ungesättigten Kohlenwasserstoffrest mit 2 bis 10 C-Atomen, wobei mindestens einer der Reste $R^8$ bis $R^{12}$ für einen ungesättigten Kohlenwasserstoffrest mit 2 bis 10 C-Atomen steht, oder wobei zwei benachbarte Reste gemeinsam für 4 bis 15 C-Atome aufweisende cyclische Gruppen stehen, die ihrerseits wiederum ungesättigte Kohlenwasserstoffreste mit 2 bis 10 C-Atome tragen können, |

eingesetzt werden.

**4.** Verfahren nach den Ansprüchen 1 bis 3, dadurch gekennzeichnet, daß als Metallocenkatalysatorsysteme solche verwendet werden, die als aktive Bestandteile

A) Metallocenkomplexe der allgemeinen Formel III

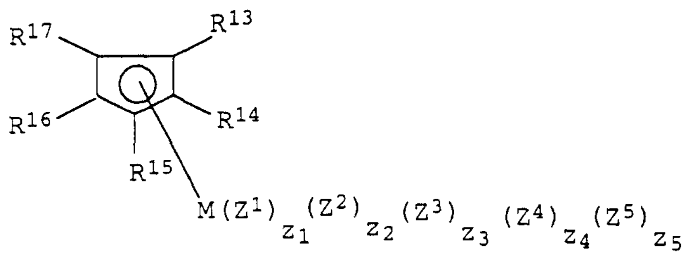

III,

in der die Substituenten und Indices folgende Bedeutung haben:

| | |
|---|---|
| $R^{13}$ bis $R^{17}$ | Wasserstoff, $C_1$- bis $C_{10}$-Alkyl, 5- bis 7-gliedriges Cycloalkyl, das seinerseits $C_1$-bis $C_6$-Alkylgruppen als Substituenten tragen kann, $C_6$- bis $C_{15}$-Aryl oder Arylalkyl und wobei gegebenenfalls auch zwei benachbarte Reste gemeinsam für 4 bis 15 C-Atome aufweisende cyclische Gruppen stehen können, oder $Si(R^{18})_3$, |
| mit $R^{18}$ | $C_1$- bis $C_{10}$-Alkyl, $C_6$- bis $C_{15}$-Aryl oder $C_3$-bis $C_{10}$-Cycloalkyl, |
| M | ein Metall der III. bis VI. Nebengruppe des Periodensystems der Elemente oder ein Metall der Lanthanidenreihe |
| $Z^1$ bis $Z^5$ | Wasserstoff, Halogen, $C_1$- bis $C_{10}$-Alkyl, $C_6$-bis $C_{15}$-Aryl, $C_1$- bis $C_{10}$-Alkoxy oder $C_1$- bis $C_{15}$-Aryloxy und |
| $z_1$ bis $z_5$ | 0, 1, 2, 3, 4 oder 5, wobei die Summe $z_1+z_2+z_3+z_4+z_5$ der Wertigkeit von M abzüglich der Zahl 1 entspricht, |

B) eine metalloceniumionenbildende Verbindung und
C) eine Aluminiumverbindung der allgemeinen Formel IV

$$AlR^{19}R^{20}R^{21} \quad IV,$$

in der

$R^{19}$ bis $R^{21}$ für Fluor, Chlor, Brom, Iod oder $C_1$- bis $C_{12}$-Alkyl stehen,

enthalten.

**5.** Verfahren nach den Ansprüchen 1 bis 4, dadurch gekennzeichnet, daß als metalloceniumionenbildende Verbindung B) offenkettige oder cyclische Alumoxanverbindungen der allgemeinen Formel V oder VI

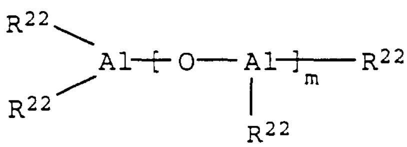

V

oder

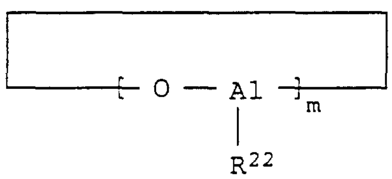

VI,

wobei $R^{22}$ eine $C_1$- bis $C_4$-Alkylgruppe bedeutet und m für eine ganze Zahl von 5 bis 30 steht, eingesetzt werden.

**6.** Verfahren nach den Ansprüchen 1 bis 4, dadurch gekennzeichnet, daß als metalloceniumionenbildende Verbindung B) eine Koordinationskomplexverbindung, ausgewählt aus der Gruppe der starken, neutralen Lewissäuren, der ionischen Verbindungen mit lewissauren Kationen und der ionischen Verbindungen mit Brönsted-Säuren als Kationen eingesetzt wird.

## Claims

**1.** A process for preparing a copolymer of vinyl-aromatic compounds at -80 to 150°C in the presence of metallocene catalyst systems using a corotating, closely intermeshing twin-screw extruder, wherein the comonomer used is an aromatic compound having at least two unsaturated hydrocarbon radicals.

**2.** A process as claimed in claim 1, wherein the vinyl-aromatic compounds used are compounds of the formula I

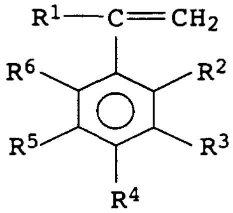

I,

where

$R^1$ is hydrogen or $C_1$-$C_4$-alkyl, and

$R^2$ - $R^6$ independently are hydrogen, $C_1$-$C_{12}$-alkyl, $C_6$-$C_{18}$-aryl or halogen or where two adjacent radicals together are a $C_4$-$C_{15}$ cyclic group.

**3.** A process as claimed in any of claims 1 to 3, wherein the comonomer used is a compound of the formula II

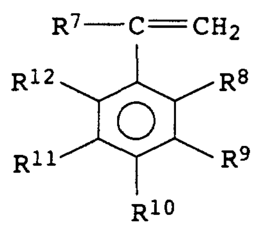

II,

where

$R^7$ is hydrogen or $C_1$-$C_4$-alkyl,

$R^8$ - $R^{12}$ independently are hydrogen, $C_1$-$C_{12}$-alkyl, $C_6$-$C_{18}$-aryl or halogen or an unsaturated $C_2$-$C_{10}$ hydrocarbon radical, at least one of $R^8$-$R^{12}$ being an unsaturated $C_2$-$C_{10}$ hydrocarbon radical, or where two adjacent radicals together are a $C_4$-$C_{15}$ cyclic group which may itself carry unsaturated $C_2$-$C_{10}$ hydrocarbon radicals.

**4.** A process as claimed in any of claims 1 to 4, wherein metallocene catalyst systems are used whose active constituents comprise

A) metallocene complexes of the formula III

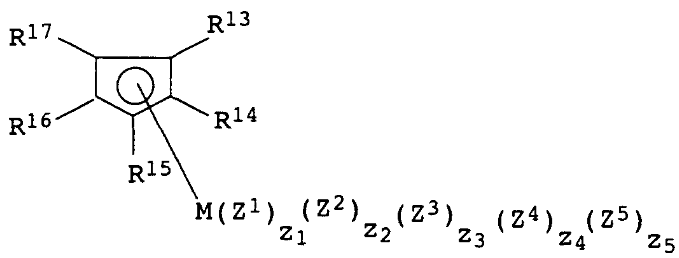

III,

where:

$R^{13}$ - $R^{17}$ are hydrogen, $C_1$-$C_{10}$-alkyl, 5-7-membered cycloalkyl with or without $C_1$-$C_6$-alkyl substituents, g $C_6$-$C_{15}$-aryl or arylalkyl, two adjacent radicals together possibly being a $C_4$-$C_{15}$ cyclic group, or $Si(R^{18})_3$,
where $R^{18}$ is $C_1$-$C_{10}$-alkyl, $C_6$-$C_{15}$-aryl or $C_3$-$C_{10}$-cycloalkyl,

M is a metal from subgroups III-IV of the Periodic Table of the Elements or a metal of the lanthanide series,

$Z^1$ - $Z^5$ are hydrogen, halogen, $C_1$-$C_{10}$-alkyl, $C_6$-$C_{15}$-aryl, $C_1$-$C_{10}$-alkoxy or $C_1$-$C_{15}$-aryloxy and

$z_1$ - $z_5$ are 0, 1, 2, 3, 4 or 5, the sum $z_1+z_2+z_3+z_4+z_5$ corresponding to one less than the valency of M.

B) a metallocenium ion former, and
C) an aluminum compound of the general formula IV

$AlR^{19}R^{20}R^{21}$ IV,

where

$R^{19}$ - $R^{21}$ are fluorine, chlorine, bromine, iodine or $C_1$-$C_{12}$-alkyl.

**5.** A process as claimed in any of claims 1 to 5, wherein the metallocenium ion former B) is an open-chain or cyclic alumoxane compound of the general formula V or VI

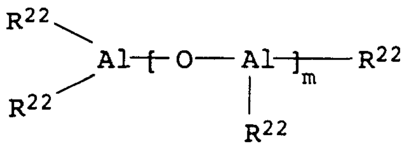

V

or

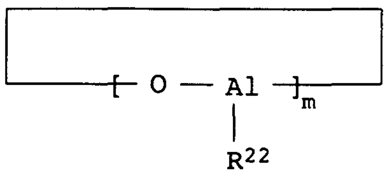

VI,

where $R^{22}$ is $C_1$-$C_4$-alkyl and m is an integer from 5 to 30.

**6.** A process as claimed in any of claims 1 to 5, wherein the metallocenium ion former B) is a co-ordination complex compound selected from the group consisting of strong neutral Lewis acids, ionic compounds containing Lewis acid cations, and ionic compounds containing Brönsted acid cations.

## Revendications

**1.** Procédé de préparation de copolymères de composés vinyl-aromatiques à des températures de l'ordre de -80 à 150°C, en présence de systèmes catalytiques à base de métallocène, par l'utilisation d'une extrudeuse à deux vis qui tournent dans le même sens et s'engagent étroitement, caractérisé en ce que, comme comonomère, on met en oeuvre un composé aromatique à au moins deux radicaux d'hydrocarbure insaturés.

**2.** Procédé suivant la revendication 1, caractérisé en ce que, comme composés vinyl-aromatiques, on met en oeuvre des composés de la formule générale I :

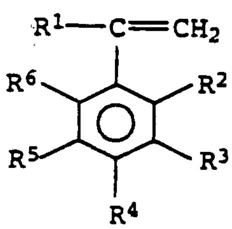

(I)

dans laquelle les substituants ont la signification suivante :

$R^1$ est de l'hydrogène ou un groupe alkyle en $C_1$-$C_4$,
$R^2$ à $R^6$ représentent indépendamment l'un de l'autre de l'hydrogène, un groupe alkyle en $C_1$-$C_{12}$, un groupe

aryle en $C_6$-$C_{18}$, de l'halogène, deux radicaux voisins pouvant former conjointement des groupes cycliques présentant 4 à 15 atomes de C.

**3.** Procédé suivant l'une des revendications 1 à 3, caractérisé en ce que, comme comonomère, on met en oeuvre des composés de la formule générale II :

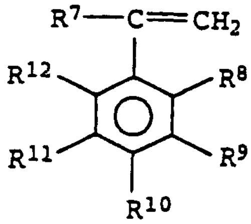

(II)

dans laquelle les substituants ont la signification suivante :

$R^7$ est de l'hydrogène ou un groupe alkyle en $C_1$-$C_4$,
$R^8$ à $R^{12}$ représentent indépendamment l'un de l'autre de l'hydrogène, un groupe alkyle en $C_1$-$C_{12}$, un groupe aryle en $C_6$-$C_{18}$, de l'halogène ou un radical d'hydrocarbure insaturé comportant 2 à 10 atomes de C, au moins un des radicaux $R^8$ à $R^{12}$ représentant un radical d'hydrocarbure insaturé comportant 2 à 10 atomes de C, deux radicaux voisins pouvant former conjointement des groupes cycliques présentant 4 à 15 atomes de C, qui à leur tour peuvent porter des radicaux d'hydrocarbure insaturés comportant 2 à 10 atomes de C.

**4.** Procédé suivant l'une des revendications 1 à 4, caractérisé en ce que, comme systèmes catalytiques à base de métallocène, on utilise ceux qui contiennent, comme composants actifs,

A) des complexes de métallocène de la formule générale III :

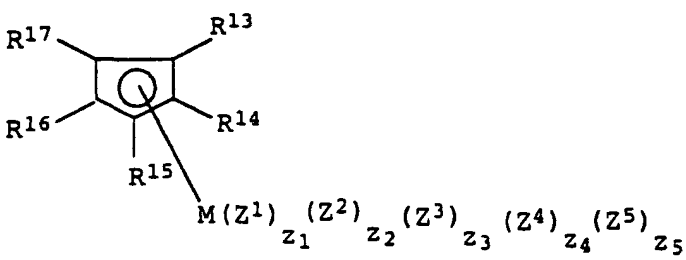

(III)

dans laquelle les substituants et indices présentent la signification suivante :

$R^{13}$ à $R^{17}$ représentent de l'hydrogène, un groupe alkyle en $C_1$-$C_{10}$, un groupe cycloalkyle pentagonal à heptagonal, qui à son tour peut porter comme substituants des groupes alkyle en $C_1$-$C_6$, un groupe arylalkyle ou aryle en $C_6$-$C_{15}$, deux radicaux voisins pouvant aussi éventuellement représenter conjointement des groupes cycliques présentant 4 à 15 atomes de C, ou $Si(R^{18})_3$,
où $R^{18}$ représente un groupe alkyle en $C_1$-$C_{10}$, aryle en $C_6$-$C_{15}$ ou cycloalkyle en $C_3$-$C_{10}$,
M représente un métal du groupe secondaire III à VI du système périodique des éléments ou un métal de la série des lanthanides,
$Z^1$ à $Z^5$ représentent de l'hydrogène, de l'halogène, un groupe alkyle en $C_1$-$C_{10}$, un groupe aryle en $C_6$-$C_{15}$, un groupe alcoxy en $C_1$-$C_{10}$ ou un groupe aryloxy en $C_1$-$C_{15}$, et
$z_1$ à $z_5$ représentent 0, 1, 2, 3, 4 ou 5, la somme de $z_1+z_2+z_3+z_4+z_5$ correspondant à la valence de M déduction faite du nombre 1,

B) un composé générateur d'ions métallocénium, et
C) un composé d'aluminium de la formule générale IV:

$$AlR^{19}R^{20}R^{21} \quad (IV)$$

dans laquelle $R^{19}$ à $R^{21}$ représentent du fluor, du chlore, du brome, de l'iode ou un groupe alkyle en $C_1$-$C_{12}$.

**5.** Procédé suivant l'une des revendications 1 à 5, caractérisé en ce que, comme composé B) générateur d'ions métallocénium, on met en oeuvre des composés d'alumoxane à chaîne ouverte ou cycliques des formules générales V ou VI :

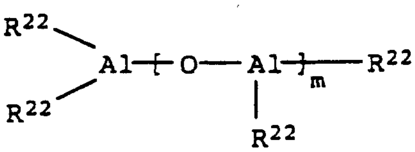

(V)

ou

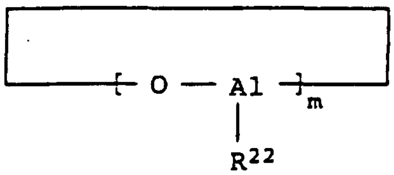

(VI)

où $R^{22}$ représente un groupe alkyle en $C_1$-$C_4$ et m est un nombre entier de 5 à 30.

**6.** Procédé suivant l'une des revendications 1 à 5, caractérisé en ce que, comme composé B) générateur d'ions métallocénium, on met en oeuvre un composé complexe de coordination, choisi parmi le groupe des acides de Lewis neutres, forts, des composés ioniques à cations d'acide de Lewis et des composés ioniques comportant des acides de Brönsted comme cations.